# NOUVEAU FASCICULE DE BREVET EUROPEEN

(11) **EP 0 567 361 B2**
(45) Date de publication et mention de la décision concernant l'opposition: **25.04.2001**
(45) Mention de la délivrance du brevet: 11.06.1997
(21) Numéro de dépôt: 93400760.0
(22) Date de dépôt: 24.03.1993
(51) Int. Cl.: B07B 1/46

(54) **Système de fixation de panneaux modulaires de criblage sur une structure de maintien**
System für die Befestigung von modularen Siebplatten an einer Halterungsstruktur
System for mounting modular screen panels to a supporting structure

(30) Priorité: 24.04.1992 FR 9205116
(43) Date de publication de la demande: 27.10.1993
(73) Titulaire: GIRON HOLDING, F-86103 Chatellerault (FR)
(72) Inventeur: Giron, Jean-Marc, F-86100 Chatellerault (FR)
(74) Mandataire: Dronne, Guy

(56) Documents cités:
- EP-A- 0 118 800
- EP-A- 0 167 999
- EP-A- 0 470 422
- EP-B- 0 236 530
- WO-A-90/05594
- AT-A- 344 630
- DE-B- 2 754 044
- DE-C- 2 622 709
- DE-C- 3 425 485
- DE-U- 8 707 070
- FR-A- 2 141 257
- FR-A- 2 574 007
- GB-A- 2 092 917
- US-A- 3 114 949
- US-A- 4 757 664

## Description

La présente invention a pour objet un système de fixation de panneaux modulaires de criblage sur une structure de maintien.

Pour réaliser le criblage ou le tamisage de matériau de constructions, on utilise des toiles de criblage présentant une surface relativement importante. Dans certains cas, on est amené à superposer à une certaine distance les unes des autres plusieurs toiles de criblage agissant successivement.

Les toiles de criblage étaient réalisées à l'origine essentiellement à partir de fils d'acier préformés puis tissés. On s'oriente de plus en plus maintenant vers des panneaux de criblage réalisés à partir de polyuréthanne en raison de sa résistance à l'abrasion. Ces nouveaux matériels ont été développés suivant deux grandes catégories : d'une part, on trouve les toiles dites tendues ou bridées qui sont immédiatement adaptables aux lieu et place des toiles traditionnelles en acier ; d'autre part, on trouve également des toiles dites modulaires qui sont constituées par des panneaux à fixer les uns à côté des autres. Cette dernière solution nécessite une modification importante de la structure de maintien du crible, cette modification étant en outre spécifique à chaque système modulaire.

Pour diverses raisons techniques et économiques, les systèmes modulaires ont connu un développement très important et sont très largement utilisés.

Si les toiles tendues ou bridées ne posent guère de problèmes de fixation et de maintien, il n'en est pas de même avec les toiles modulaires qui soulèvent de plus grandes difficultés pour assurer leur fixation correcte.

Une installation de criblage est constituée essentiellement par un châssis vibrant sur lequel est fixée une structure de maintien constituée par des profilés qui sont fixés parallèlement les uns aux autres avec un entre-axe fixe et des panneaux modulaires de criblage qui sont fixés eux-mêmes par leurs bords sur ces profilés. On a déjà proposé différents systèmes de fixation des panneaux modulaires sur la structure de maintien constituée par les profilés. Le document EP-A-0 167 999 décrit une de ces solutions.

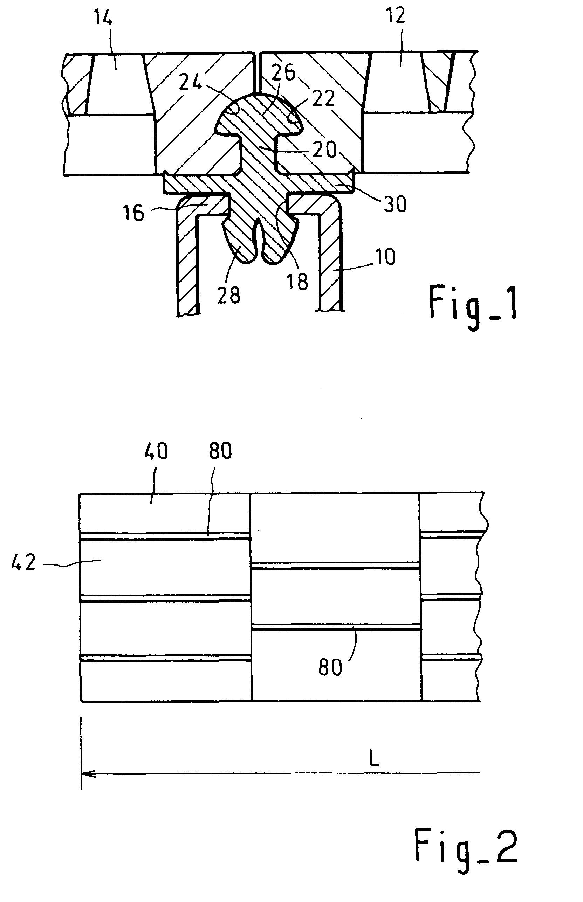

La figure 1 annexée montre le mode de fixation décrit dans le document mentionné ci-dessus. Sur cette figure, on a représenté une partie du profilé 10 sur lequel les panneaux modulaires de criblage 12 et 14 doivent être fixés. La face supérieure 16 du profil 10 est munie d'une fente longitudinale 18. La fixation des panneaux 12 et 14 sur le profilé est réalisée à l'aide d'un listeau 20. Des évidements 22, 24 sont ménagés dans les bords en regard des panneaux de criblage 12 et 14. Le listeau de fixation 20 comporte une tête évasée 26 qui pénètre dans les évidements 22 et 24, un pied 28 formant un clip engagé dans la fente 18 du profil 10 et une partie intermédiaire formant des lèvres 30 interposées entre la face supérieure 16 du profilé 10 et la face inférieure des bords des panneaux de criblage 12 et 14.

Un tel système de fixation présente un certain nombre d'inconvénients. Compte tenu du mode d'accouplement du listeau et des deux panneaux contigus de criblage par déformation élastique du polyuréthanne. l'opération de montage des panneaux neufs nécessite un effort important. L'opération de démontage des panneaux usagés en vue de leur remplacement nécessite un effort encore plus important. Par exemple, il est nécessaire d'introduire un tournevis ou un autre outil similaire dans le plan de joint entre deux panneaux et de procéder à l'extraction d'un panneau à une extrémité et tirage vers le haut du panneau pour l'extraire sur toute sa longueur.

En outre, compte tenu du fait que ces panneaux se trouvent généralement montés sur des cribles à plusieurs plateaux, c'est-à-dire à plusieurs niveaux de surface de criblage et que ces différents plateaux sont distants d'une longueur souvent limitée à 40 ou 50 cm, l'extraction des panneaux inférieurs nécessite le plus souvent le démontage des panneaux supérieurs.

De plus, en raison de la flexibilité des panneaux réalisés en polyuréthanne (par exemple la portée de chaque panneau est de l'ordre de 300 mm) il se produit une ouverture du plan de joint entre deux panneaux adjacents sous l'effet conjugué de la vibration et des chocs des produits criblés. Les produits criblés et l'eau de lavage ont tendance à pénétrer dans le plan de joint et à provoquer une usure préférentielle dans cette zone. Au bout d'un certain temps, il se crée à cet endroit une gouttière facilitant toujours davantage le cheminement préférentiel de l'eau et des produits sur une partie qui est bien sûr dépourvue de perforations, ce qui empêche ainsi le criblage des matériaux et l'élimination de l'eau de lavage.

Il en résulte qu'ainsi, lorsque les panneaux formant la toile de criblage sont alignés, une partie du matériau à cribler ne fait l'objet d'aucun criblage puisqu'il ne rencontre aucun orifice de criblage. L'efficacité globale du criblage s'en trouve donc nécessairement réduite.

Pour remédier à ces inconvénients, un objet de la présente invention est de fournir un système de fixation de panneaux modulaires de criblage sur une structure de maintien qui, d'une part, permet un montage et un démontage aisés des panneaux et, d'autre part, évite la formation des gouttières mentionnées ci-dessus.

Pour atteindre ce but, le système de fixation de panneaux modulaires de criblage est conforme aux caracteristiques techniques de la revendication 1 annexée.

On voit ainsi que, grâce aux caractéristiques de l'invention, la mise en place ou l'enlèvement des panneaux modulaires de criblage est aisé.

Pour démonter les panneaux, il suffit d'agir sur la partie formant chapeau des éléments entretoise pour extraire 3 ceux-ci et libérer les panneaux de criblage.

L'invention permet effectivement d'éviter également la formation des gouttières comme cela se présentait avec les techniques de l'art antérieur. En effet, les chapeaux recouvrent les bords des panneaux de criblage le long de leur bord d'assemblage. En conséquence, on obtient non pas la formation d'une gouttière mais au contraire une partie en surépaisseur qui tend à canaliser l'eau de lavage et les matériaux à cribler vers les zones actives de criblage, c'est-à-dire les zones munies de perforations.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1 déjà décrite montre en coupe verticale un mode connu de fixation des panneaux modulaires de criblage ;
- la figure 2 est une vue de dessus d'une toile de criblage montrant la disposition des différents panneaux la constituant ;
- la figure 3 est une vue en coupe verticale d'un mode de réalisation d'un système de fixation des panneaux en cours de montage ;
- la figure 4 est une vue semblable à la figure 3 montrant le système de fixation entièrement mis en place ;
- la figure 5 montre en coupe verticale un mode de réalisation du système de fixation ; et
- la figure 6 est une vue analogue à celle de la figure 5 montrant le système de fixation entièrement mis en place.

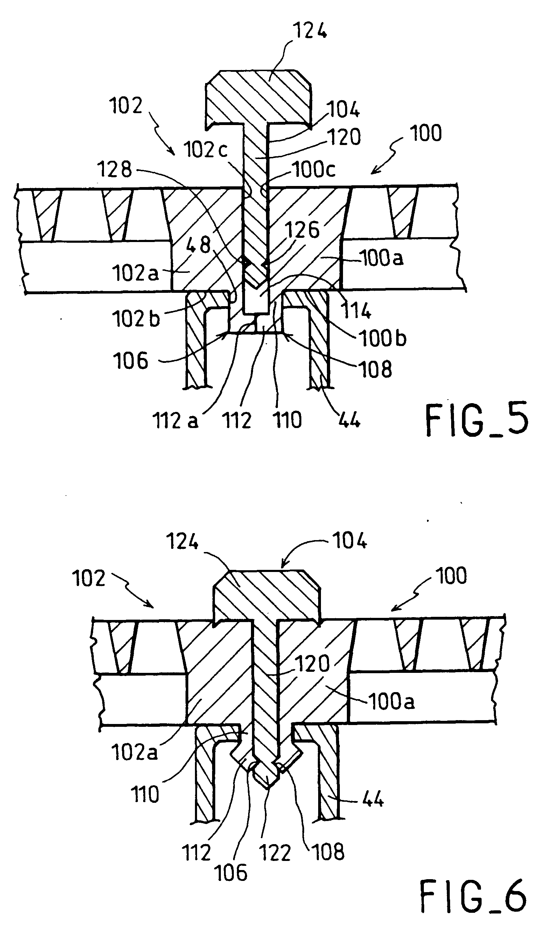

Les figures 2 à 4 ont simplement pour but d'illustrer les caracteristiques d'un systeme de fixation de panneaux de criblage. Seules les figures 5 et 6 illustrent le mode de réalisation de l'invention.

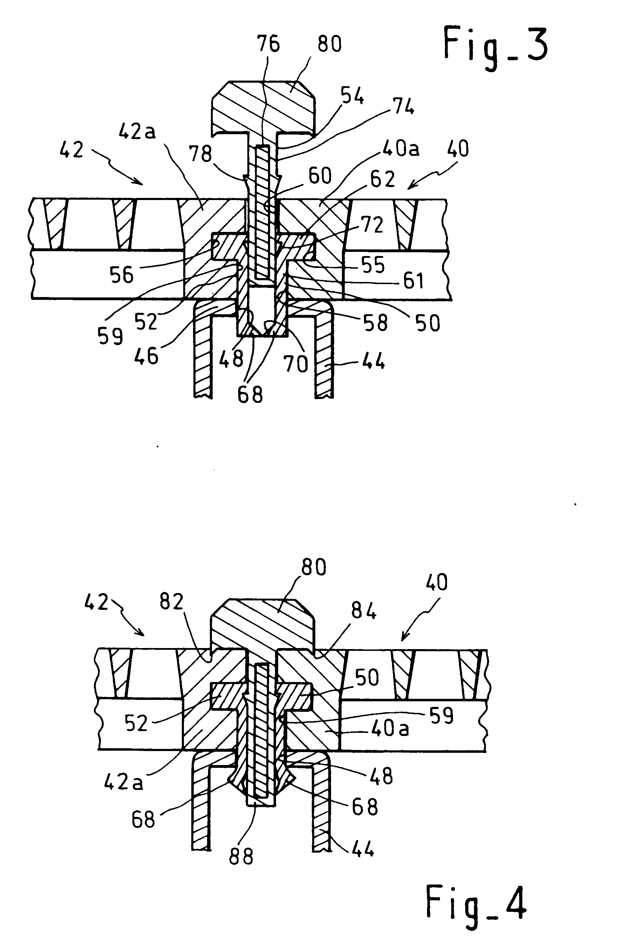

En se référant tout d'abord à la figure 3, on va décrire en détail un mode de réalisation d'un système de fixation des panneaux modulaires.

Sur cette figure, on a représenté les panneaux modulaires 40 et 42 qui doivent être fixés entre eux par leur bord en regard 40a et 42a et fixés sur la structure de maintièn dont on a représenté un profilé 44. Ce profilé est muni sur sa face supérieure 46 d'une fente longitudinale 48 disposée selon la direction des bords d'assemblage des panneaux 40 et 42. Le système de fixation se compose de deux éléments de blocage 50 et 52 constitués de préférence par des tenons de blocage, et par une pièce entretoise 54. Les bords 40a et 42a des panneaux 40 et 42 sont munis, dans leur partie médiane selon leur épaisseur, d'une rainure 55 et 56 qui peut de préférence être en forme de queue d'aronde. On voit également que la face 58 du bord 40a disposée en dessous de la rainure 55 est en retrait par rapport au bord 60 de la partie du bord du panneau disposée audessus de la rainure 55. Il en va bien sûr de même pour le bord 42a du panneau 42. Chaque tenon de blocage 50, 52 comporte un corps 61 dont l'épaisseur est sensiblement égale à la différence de position entre les faces 58 et 60, un talon 62 disposé à la partie supérieure du corps 61 pour pénétrer dans la rainure 55 ou 56, et à son extrémité inférieure une portion en surépaisseur 68 qui est définie par une surface inclinée 70 tournée vers l'autre panneau. De préférence, également le corps 61 de chaque tenon de blocage comporte au niveau du talon 62 une gorge à section droite triangulaire 72.

Les tenons de blocage 50 et 52, dans un premier temps, sont respectivement engagés dans les rainures 55 et 56. La longueur du corps de chaque tenon est suffisante pour que, après le positionnement des panneaux 40 et 42, les portions 68 en surépaisseur de ces tenons soient disposées à l'intérieur des profilés 44, c'est-à-dire au-delà de leur paroi supérieure 46. La pièce entretoise 54 comporte également un corps 74 de forme à section droite sensiblement parallélépipédique et allongée selon la direction des bords des panneaux qui peut être renforcé par une âme métallique 76. Ce corps peut comporter une saillie à section droite triangulaire 78 pour coopérer avec ta gorge 72 des tenons de blocage. Enfin, à sa partie supérieure la pièce d'entretoise 54 comporte un chapeau 80 dont la largeur dans le plan des panneaux 40 et 42 est très sensiblement supérieure à celle du corps 78. Sur la périphérie de sa face inférieure, le chapeau peut comporter une lèvre 82, 84 de part et d'autre du corps 74.

La figure 4 montre la façon de fixer les panneaux 40 et 42 sur le profilé 44 à l'aide du premier mode de réalisation de l'invention. Les tenons de blocage 50 et 52 ayant déjà été mis en place dans les bords 40a et 42a des panneaux, le corps de la pièce entretoise 54 est engagé entre les faces internes des tenons 50 et 52. Le corps de la pièce entretoise exerce une pression sur les tenons provoquant une certaine déformation de ceux-ci. Lorsque la pièce entretoise 54 arrive en fin de course, son extrémité 88 provoque l'écartement des extrémités en surépaisseur 68 des tenons de blocage. Ainsi, l'ensemble constitué par les tenons de blocage et la pièce entretoise se trouve riveté dans la fente 48 du profité par écartement des portions 68 des tenons d'ancrage. En outre, la coopération entre la gorge 72 des tenons de blocage et les saillies correspondantes 78 de la pièce d'entretoise assure une immobilisation de cette dernière dans les tenons de blocage selon la direction verticale. Enfin, on voit que les lèvres 84 et 82 disposées de part et d'autre du corps de la pièce entretoise forme des lèvres d'étanchéité en contact avec la face supérieure des bords 42a et 40a des panneaux de criblage à fixer.

Sur la figure 2, on a représenté en vue de dessus une disposition préférée des panneaux de criblage 40, 42. Au lieu que ceux-ci soient alignés, ils sont disposés en quinconce. Ainsi, les chapeaux 80 des différents ensembles de fixation constituent des chicanes qui imposent ainsi aux matériaux à cribler et au liquide de lavage de passer effectivement dans les zones des panneaux modulaires comportant les orifices de criblage. Bien entendu, les profilés formant-lastructure de maintien présentent la même disposition en quinconce.

En se référant maintenant aux figures 5 et 6, on va décrire un mode de réalisation de l'invention.

Sur la figure 5. on a représenté deux panneaux adjacents 100 et 102 qui doivent être solidarisés entre eux et fixés sur le profilé 44 muni de sa fente longitudinale 48. Les bords 100a et 102a des panneaux sont prolongés au-delà de leur face d'appui 100b et 102b sur le profilé 44 par des extensions longitudinales 106 et 108. Chaque extension comporte une première portion 110 qui prolonge la face 100c, 102c des bords 100 et 102 et par une deuxième portion 112 s'étendant perpendiculairement à la portion 110. Fonctionnellement les portions 112 sont équivalentes aux surépaisseurs 68 de la figure 3. Les extensions 106 et 108 sont définies de telle manière qu'elles puissent pénétrer dans la fente 48 du profilé 44. Les faces en regard 112a des deuxièmes portions 112 sont en contact mutuel alors que les portions 110 laissent entre elles un espace qui poursuit l'espace 114 laisse entre les faces 100c et 102c des bords des panneaux.

La fixation des deux panneaux sur le profilé 44 est réalisé à l'aide d'une pièce entretoise 104 très semblable à la pièce entretoise 54 de la figure 3. La pièce 104 comprend un corps 120 qui se termine de préférence par une partie biseautée 122. La largeur du corps 120 de la pièce 104 est déterminée pour pouvoir être engagée entre les faces 100c et 102c des'bords des panneaux. La pièce entretoise 104 comporte également un chapeau 124 identique au chapeau 80 de la figure 3. Enfin, le corps 120 de la pièce entretoise comporte deux encoches 126 et 128 disposées à proximité de son extrémité inférieure 122.

La figure 6 montre la fixation des panneaux à l'aide du deuxième mode de réalisation de l'invention. La pièce 104 est engagée entre les bords des panneaux 100 et 102. Son extrémité biseautée 122 repousse les portions 112 des extensions 106 et 108 réalisant ainsi un effet de rivet dans la fente 48 du profilé 44. De plus, les encoches 126 et 128 sont disposées de telle manière que; lorsque la pièce 104 est complètement enfoncée entre les panneaux 100 et 102, les extrémités des portions 112 puissent pénétrer dans les encoches 126 et 128, verrouillant ainsi la pièce 104.

La description précédente montre clairement les avantages procurés par la présente invention. Les tenons de blocage étant déjà engagés dans les rainures des bords des panneaux de criblage ou faisant partie intégrante du bord des panneaux, la fixation des panneaux sur la structure de maintien nécessite seulement l'enfoncement à force des pièces entretoises. Pour démonter les panneaux, il suffit d'extraire les pièces entretoises par tout moyen convenable pour libérer les panneaux.

En outre, les plans de joint des panneaux sont recouverts par les chapeaux des pièces entretoises. En conséquence, même s'il se forme des gouttières dans ces zones sous l'effet de la flexion des panneaux, ces gouttières sont recouvertes par les chapeaux et sont donc sans effet sur l'écoulement des matériaux à cribler et de l'eau de lavage.

Enfin, les faces inférieures des bords des panneaux de criblage sont directement plaquées sur la face supérieure des profilés formant la structure de maintien. On obtient ainsi une très bonne stabilité des panneaux après leur fixation.

## Revendications

1. Système de fixation de panneaux modulaires de criblage de forme générale rectangulaire sur une structure de maintien (44), les panneaux (100, 102) étant fixés sur ladite structure (44) et entre eux par leurs bords adjacents (100a, 102a) disposés selon la direction d'un des côtés des panneaux, ladite structure de maintien (44) étant munie de fentes (48) disposées en regard des bords de fixation, ledit système comprenant des moyens de fixation aptes à pénétrer dans chaque fente (48) et à coopérer avec les bords (100a, 102a) desdits panneaux pour solidariser lesdits panneaux sur ladite structure,
chaque bord (100a, 102a) d'un panneau comprenant une extension (106, 108) faisant partie intégrante du bord et faisant saillie hors de la face inférieure dudit panneau en appui sur ladite structure de maintien (44) pour former une partie d'ancrage pénétrant dans ladite fente de la structure de maintien, ladite partie d'ancrage comportant une partie faisant surépaisseur (112),
et les dits moyens de fixation comprenant une pièce formant entretoise (104) laquelle comporte un corps (120) apte à être engagé entre les bords de deux panneaux adjacents et leurs extensions (106, 108) en exerçant une pression sur eux selon le plan des panneaux et une extrémité inférieure (122) pour écarter les portions (112) formant surépaisseur des extensions (106, 108) lorsque ladite pièce formant entretoise est entièrement introduite entre les bords des panneaux de telle manière que lesdites portions formant surépaisseur soient ancrées dans ladite structure de maintien (44), caractérisé en ce que ledit corps (120) de ladite pièce entretoise est en outre muni de deux évidements (126, 128) à proximité de son extrémité inférieure (122), lesdits évidements étant disposés de telle manière que, lorsque la pièce entretoise est entièrement engagée entre les bords des panneaux, chaque portion (112) formant surépaisseur pénètre en partie dans son évidement respectif, et en ce que ladite pièce entretoise (104) comporte en outre une deuxième extrémité formant chapeau (124) apte recouvrir la périphérie des faces supérieures desdits panneaux (100, 102) selon leur bord de fixation lorsque ladite pièce formant entretoise (104) est entièrement engagée entre les bords desdits panneaux (100a, 102a).

2. Système de fixation de panneaux selon la revendication 1, caractérisé en ce que l'extrémité inférieure (122) de la pièce entretoise est en forme de biseau.

## Claims

1. System for fixing modular screening panels that are generally rectangular in shape to a supporting structure (44), the panels (100, 102) being fixed to said structure (44) and to each other by their adjacent edges (100a, 102a) arranged in the direction of one of the sides of the panels, said supporting structure (44) being provided with slots (48) arranged facing the fixing edges, said system comprising fixing means suitable for penetrating into each slot (48) and for co-operating with the edges (100a, 102a) of said panels in order to fasten said panels firmly to said structure,
each edge (100a, 102a) of a panel comprising an extension (106, 108) forming an integral part of the edge and projecting from the lower face of said panel bearing against said supporting structure (44) in order to form an anchoring portion penetrating into said slot of the supporting structure, said anchoring portion having a portion forming an oversize (112),
said fixing means comprising a part forming a spacer (103), which has a body (120) suitable for being engaged between the edges of two adjacent panels and their extensions (106), 108) while exerting pressure on them along the plane of the panels and a lower end (122) for moving away the portions (112) forming an oversize of the extensions (106, 108) when said part forming a spacer is introduced fully between the edges of the panels in such a way that said portions forming an oversize are anchored inside said supporting structure (44), characterised in that said body (120) of said spacer part is further provided with two cut-outs (126, 128) close to its lower edge (122), said cut-outs being arranged in such a way that, when the spacer part is fully engaged between the edges of the panels, each portion (112) forming an oversize penetrates partly into its respective cut-out, and in that said spacer part (104) further has a second end forming a cap (124) suitable for overlapping the periphery of the upper faces of said panels (100, 102) along their fixing edge when said part forming a spacer (104) is fully engaged between the edges of said panels (100a, 102a).

2. System for fixing panels according to Claim 1, characterised in that the lower end (122) of the spacer part is bevelled.

## Patentansprüche

1. System für die Befestigung von modularen Siebplatten mit im allgemeinen rechteckiger Form an einer Halterungsstruktur (44), wobei die Platten (100, 102) an der Struktur (44) und untereinander durch ihre benachbarten Ränder (100a, 102a), die in Richtung einer der Seiten der Platten angeordnet sind, befestigt sind, wobei die Halterungsstruktur (44) mit Schlitzen (48) ausgestattet ist, die gegenüber den Befestigungsrändern angeordnet sind, wobei das System Befestigungsmittel aufweist, die in jeden Schlitz (48) eintreten können und mit den Rändern (100a, 102a) der Platten zusammenwirken können, um die Platten an der Struktur (44) zu befestigen,
wobei jeder Rand (100a, 102a) einer Platte eine Verlängerung (106, 108) aufweist, die integraler Bestandteil des Rands ist und außerhalb der Unterseite der Platte vorragt in Abstützung an der Halterungsstruktur (44), um einen Verankerungsteil zu bilden, der in den Schlitz der Halterungsstruktur eintritt, wobei der Verankerungsteil einen Abschnitt mit Überdicke (112) aufweist,
und die Befestigungsmittel ein einen Steg (104) bildendes Stück, das einen Körper (120) aufweist, der zwischen die Ränder zweier benachbarter Platten und ihre Verlängerungen (106, 108) eingelassen werden kann, durch Ausübung eines Druckes auf diese gemäß der Plattenfläche, und ein unteres Ende (122) aufweisen, um die Teile (112) mit Überdicke der Verlängerungen (106, 108) zu spreizen, wenn das Stegstück vollkommen zwischen den Plattenrändern so eingelassen ist, daß die Teile mit Überdicke in der Halterungsstruktur (44) verankert sind, dadurch gekennzeichnet, daß der Körper (120) des Stegstücks mit zwei Vertiefungen (126, 128) in der Nähe seines unteren Endes (122) ausgestattet ist, wobei die Vertiefungen derart angeordnet sind, daß, wenn das Stegstück vollständig zwischen den Rändern der Platten eingelassen ist, jeder Abschnitt (112) mit Überdicke teilweise in seine jeweilige Vertiefung eintritt, und daß das Stegstück (104) ein zweites Ende aufweist, das eine Abdeckung (124) bildet, die den Umfang der Oberseiten der Platten (100, 102) entlang ihres Befestigungsrandes bedecken kann, wenn das den Steg (104) bildende Stück vollkommen zwischen die Ränder der Platten (100a, 102a) eingelassen ist.

2. System für die Befestigung von Platten nach Anspruch 1, dadurch gekennzeichnet, daß das untere Ende (122) des Stegstücks eine abgeschrägte Form aufweist.
